# EUROPEAN PATENT APPLICATION

(11) **EP 4 156 100 A1**
(43) Date of publication of application: **29.03.2023**
(21) Application number: 22190545.8
(22) Date of filing: 16.08.2022
(51) Int. Cl.: G06T 7/33

(54) **PROVIDING RESULT IMAGE DATA**

(30) Priority: 23.09.2021 DE 102021210656
(71) Applicant: Siemens Healthcare GmbH, 91052 Erlangen (DE)
(72) Inventor: Alzaga, Amilcar, 96185 Schönbrun im Steigerwald (DE); Kapoor, Ankur, Plainsboro, 08536 (US); Pheiffer, Thomas, Philadelphia, 19103 (US); Regensburger, Alois, 91099 Poxdorf (DE); Tamersoy, Birgi, 91052 Erlangen (DE)

(57) **Abstract**

The current invention concerns a method for providing result image data, comprising:
- receiving pre-acquired first image data of a subject including an examination region,
wherein the first image data maps the examination region,
- generating a model dataset based on the first image data,
- receiving pre-acquired second image data of the subject, wherein the model dataset and the second image data map at least a common part of the examination region at a second level of detail,
- pre-aligning the model dataset and the second image data at a first level of detail below the second level of detail based on:
- first features of a first class of features of the examination region which are mapped at the first level of detail in the model dataset and the second image data and/or
- an acquisition geometry of the second image data with respect to the subject,

- registering the model dataset and the second image data at the second level of detail based on second features of a second class of features of the examination region which are mapped at the second level of detail in the model dataset and the second image data,
wherein the second class of features is mappable at the second level of detail or above,
- providing the registered second image data and/or the registered model dataset as the result image data.

The current invention further concerns a provision unit, a system and a computer program product.

## Description

The current invention concerns a method for providing result image data, a provision unit, a system and a computer program product.

A medical staff, for example an interventionalist and/or a surgeon, can be supported during an examination and/or treatment of a subject, in particular intra-procedurally, via displaying a graphical representation of pre-procedural image data of the subject. Here, the pre-procedural image data can advantageously comprise pre-processed information, for example a planning information. Often times, intra-procedural image data of the subject is acquired for a supervision and/or guidance during the examination and/or treatment. In order to combine the pre- and the intra-procedural image data in a common graphical display, the pre- and intra-procedural image data can be registered. The registration can for example be based on anatomical and/or geometrical features of the subject, which are commonly mapped in the pre- and intra-procedural image data. These features are often limited by the level of detail at which they are mapped in the pre-procedural and/or the intra-procedural image data.

However, such registration between the pre- and intra-procedural image data can become challenging, in particular when the pre- and intra-procedural image data contain a mapping of soft tissue organs such as a liver for example. Large deformations of such a soft tissue organ can lead to a large variation in the spatial positions of geometric and/or anatomical features of the soft tissue organ between the pre- and intra-procedural imaging. Here, the registration problem is often times underconstrained and can only be solved by making assumptions which can lead to unwanted deviations from reality.

Hence, it is an object of the current invention to provide a method and means for a more robust and precise image registration.

This object is achieved by the subject-matter according to each independent claim. Advantageous embodiments are described in the dependent claims.

In a first aspect, the current invention concerns a method for providing result image data. In a first step, pre-acquired first image data of a subject including an examination region is received. Further, the first image data maps the examination region. In a further step, a model dataset is generated based on the first image data. In a further step, pre-acquired second image data of the subject is received. The model dataset and the second image data map at least a common part of the examination region at a second level of detail. In a further step, the model dataset and the second image data are pre-aligned at a first level of detail below the second level of detail based on first features of a first class of features of the examination region which are mapped at the first level of detail in the model dataset and the second image data. Alternatively or in addition, the model dataset and the second image data are pre-aligned at the first level of detail based on an acquisition geometry of the second image data with respect to the subject, in particular the examination region. In a further step, the model dataset and the second image data are registered at the second level of detail based on second features of a second class of features of the examination region which are mapped at the second level of detail in the model dataset and the second image data, wherein the second class of features is mappable at the second level of detail or above. In a further step, the registered second image data and/or the registered model dataset are provided as the result image data.

The aforementioned steps of the proposed method can at least partially be executed successively and/or simultaneously. Further, the steps of the proposed method can at least partially, in particular completely, be computer-implemented.

The receiving of the pre-acquired first image data and/or the pre-acquired second image data can comprise collecting and/or reading out data from an electronically readable storage medium and/or receiving data from a memory unit, in particular a database. Further, the pre-acquired first and second image data can be received from the same medical imaging device or different medical imaging devices. The at least one medical imaging device for acquiring the first and/or the second image data can comprise a magnetic resonance imaging system (MRI) and/or a positron emission tomography system (PET) and/or an ultrasound system and/or a medical X-ray system and/or a computed tomography system (CT) and/or an optical imaging system, for example an endoscope and/or a laparoscope.

Advantageously, the first and the second image data were acquired before the beginning of the proposed method, in particular the first and the second image data are pre-acquired.

The first image data can map the examination region of the subject two-dimensional (2D) or three-dimensional (3D) spatially resolved. Further, the second image data can map at least the common part of the examination region 2D or 3D spatially resolved. In addition, the first and/or the second image data image data can be time-resolved. The subject can be a human and/or animal patient and/or an examination phantom. Further, the examination region can comprise a spatial region of the subject, for example an anatomical region, in particular an organ and/or a tissue. The common part of the examination region can comprise the examination region or a part, in particular a spatial section, of the examination region. The first image data can comprise multiple image points, in particular pixels or voxels, with image values assigned thereto mapping the examination region. Likewise, the second image data can each comprise multiple image points, in particular pixels or voxels, with image values assigned mapping at least the common part of the examination region. If the first and/or the second image data are time-resolved, the image points can each comprise time-intensity curves. Thereby, the first and/or the second image data can each map a change in the examination region of the subject, for example a contrast agent flow and/or a motion, in particular a physiological motion and/or a motion of a medical object. Further, the first image data can comprise first meta data, wherein the first meta data can comprise an information about the acquisition geometry and/or an acquisition parameter and/or an operating parameter of the medical imaging device for acquiring the first image data at the time of acquiring the first image data. Likewise, the second image data can comprise second meta data, wherein the second meta data can comprise an information about the acquisition geometry and/or an acquisition parameter and/or an operating parameter of the medical imaging device for acquiring the second image data at the time of acquiring the second image data.

In addition, the first image data can comprise a planning information, for example a surgical resection plan. The planning information can comprise a graphical workflow hint, which is registered with the mapping of the examination region in the first image data, in particular the features of the first and/or second class of features.

Advantageously, the first image data can map the examination region at a first acquisition time, in particular pre-procedurally. Thereby, the first image data can map the examination region in a first deformation state. The first deformation state can for example be characterized by a spatial arrangement of the first and/or second features mapped in the first image data relative to each other. Further, the second image data can map at least the common part of the examination region at a second acquisition time after the first acquisition time, in particular intra- or post-procedurally. Thereby, the second image data can map the examination region in a second deformation state. The second deformation state can for example be characterized by a spatial arrangement of the first and/or second features mapped in the second image data relative to each other.

The first and/or the second level of detail can be characterized by mapping and/or acquisition parameters of the first image data, the second image data and/or the at least one medical imaging device. In particular, the first and/or second level of detail can be characterized by a spatial resolution and/or time resolution. The first and/or the second level of detail can be characterized by further image quality metrics of the first and/or the second image data, such as a dynamic range of image values, a signal-to-noise ratio (SNR) and/or a contrast-to-noise ratio (CNR). Moreover, the first and/or the second level of detail can be characterized by different types of anatomy, for example an organ and/or tissue type, which exhibit different image contrasts, in particular for different imaging modalities and/or image acquisition parameters. The second level of detail can be determined and/or limited by the highest common spatial resolution and/or time resolution and/or image quality metric of the first and second image data. Further, the first level of detail can be determined by a level of accuracy for generating the model dataset, for example a reconstruction parameter and/or a model parameter. Alternatively or in addition, the first level of detail can be determined by a level of accuracy of the acquisition geometry of the second image data with respect to the subject.

The features of the first class of features can exhibit a size above a minimum size of the first class of features determined by the first level of detail. Likewise, the features of the second class of features can exhibit a size above a minimum size of the second class of features determined by the second level of detail and below the minimum size of the first class of features.

Advantageously, the model dataset can comprise a 2D or 3D spatial representation of the examination region. Further, the model dataset can be time-resolved. Advantageously, the model dataset can represent the examination region before the acquisition of the second image data, in particular pre-procedurally. The model dataset can comprise the first image data. Alternatively, the model dataset can be generated based on the first image data, for example reconstructed and/or segmented from the first image data. The model dataset can exhibit all features laid out above for the first image data. Moreover, the model dataset can comprise a virtual representation of the examination region, in particular an anatomical object and/or tissue within the examination region, for example a mesh model and/or a center line model.

The first class of features can comprise all features of the examination region, in particular all geometrical and/or anatomical features, which features are mappable and distinguishable, in particular identifiable, at the first level of detail and above. The first class of features can for example comprise large-scale anatomical landmarks of the examination region, for example a tissue border and/or a shape of an organ surface and/or a tumor and/or a large vessel and/or a large vessel bifurcation. Since the features of the first class of features are mappable and identifiable at the first level of detail and above, in particular also at the second level of detail, the second image data can comprise first features of the first class of features which are commonly mapped in the model dataset, in particular in the first image data, and the second image data at the first level of detail. The first features of the first class of features can comprise geometrical and/or anatomical features of the examination region, which are mapped at the first level of detail in the model dataset, in particular the first image data, and the second image data. Further, at least part, in particular all, of the first features which are mapped in the model dataset can be generated as part of the generating of the model dataset. For example, at least part, in particular all, of the first features which are mapped in the model dataset are not mapped in the first image data. Here, the first image data can map features of the second class of features, in particular the second features, but the first features are advantageously generated, in particular reconstructed, as part of the generating of the model dataset.

The pre-aligning of the model dataset and the second image data can comprise determining a first transformation rule for rigidly and/or deformably transforming, in particular translating and/or rotating and/or deforming and/or scaling, the model dataset and/or the second image data. Advantageously, a minimum level of accuracy of the pre-alignment between the model dataset and the second image data, in particular a level of accuracy of the first transformation rule, can be equivalent to the first level of detail. The pre-aligning of the model dataset and the second image data can comprise minimizing a deviation, in particular a misalignment, between the first features. Hence, the pre-alignment of the model dataset and the second image data can comprise an alignment of the first features at the first level of detail. Furthermore, the pre-aligning of the model dataset and the second image data can comprise applying the first transformation rule to the model dataset and/or the second image data.

Alternatively or in addition, the pre-aligning of the model dataset and the second image data can be based on the acquisition geometry of the second image data with respect to the subject, in particular in a subject coordinate frame. In particular, the pre-aligning of the model dataset and the second image data can be based on the acquisition geometry of the second image data with respect to the examination region. The acquisition geometry of the second image data can be provided by the medical imaging device for acquiring the second image data. Alternatively, the acquisition geometry of the second image data can be detected by a tracking system, for example an optical and/or electromagnetic and/or ultrasound and/or mechanical sensor. The tracking system can be configured to detect the spatial position and/or orientation and/or pose of the at medical imaging device for acquiring the second image data at the time of acquiring the second image data with respect to the subject, in particular the examination region.

The acquisition geometry of the second image data can comprise a positioning information, in particular a spatial position and/or orientation, in particular an angulation, and/or pose, of the medical imaging device for acquiring the second image data at the time of acquiring the second image data, in particular at the first level of detail, with respect to the subject, in particular the examination region. In particular, the pre-aligning of the model dataset and the second image data can be based on a relative positioning between the medical imaging device for acquiring the second image data at the times of acquiring the second image data and the subject, in particular the examination region.

The model dataset and the second image data map at least the common part of the examination region at the second level of detail or above. The registering of the model dataset and the second image data can be based on the second features, in particular geometrical and/or anatomical features, of the second class of features of the examination region, which are mapped at the second level of detail in the model dataset, in particular the first image data, and the second image data. The second class of features can comprise all features of the examination region, in particular all geometrical and/or anatomical features, which features are mappable and distinguishable, in particular identifiable, at the second level of detail and above. In particular, the features of the second class of features are not mappable or distinguishable below the second level of detail, in particular at the first level of detail. Moreover, the features of the second class of features can comprise small-scale, in particular micro-scale or low millimeter-scale, anatomical landmarks of the examination region, for example micro-vasculature, in particular a network of fine vessels, and/or fibers of fibrotic liver tissue.

Further, the registering of the model dataset and the second image data can comprise determining a second transformation rule for rigidly and/or deformably transforming, in particular translating and/or rotating and/or deforming and/or scaling, the model dataset and/or the second image data. The determining of the second transformation rule can comprise determining a measure for a local pressure and/or deformation and/or twisting state of the second features. Advantageously, a minimum level of accuracy of the registration between the model dataset and the second image data, in particular a minimum level of accuracy of the second transformation rule, can be equivalent to the second level of detail. The registering of the model dataset and the second image data can comprise minimizing a deviation, in particular a misalignment, between the second features. Hence, the registering of the model dataset and the second image data can comprise an alignment of the second features at the second level of detail. Furthermore, the registering of the model dataset and the second image data can comprise applying the second transformation rule to the, in particular pre-aligned, model dataset and/or the, in particular pre-aligned, second image data.

The providing of the result image data can comprise a storing on an electronically readable storage medium and/or a transmitting to a provision unit and/or a displaying of a graphical representation of the result image data by means of a display unit. Advantageously, the providing of the result image data comprises providing the registered model dataset and/or the registered second image data.

The proposed method can enable a precise and robust registration between the model dataset and the second image data.

In an especially preferred embodiment of the proposed method a geometric and/or anatomical model and/or initial image data of the examination region can be received. Further, the generating of the model dataset can comprise registering the first image data to the geometric and/or anatomical model and/or the initial image data based on further features of the first class of features which are mapped in the first image data and represented in the geometric and/or anatomical model and/or the initial image data at the first level of detail.

The receiving of the geometric and/or anatomical model and/or the initial image data of the examination region, in particular the subject, can comprise collecting and/or reading out data from an electronically readable storage medium and/or receiving data from a memory unit, in particular a database. Advantageously, the geometric and/or anatomical model of the examination region can comprise a generic and/or specific representation of the subject, in particular the examination region, at the first level of detail or above. Further, the geometric and/or anatomical model can comprise a 2D or 3D representation of geometric and/or anatomical objects of the examination region, for example centerlines and/or a vessel segment and/or a vessel tree and/or a mesh model. Moreover, the initial image data can comprise a 2D or 3D mapping of the examination region. The initial image data can be received from the at least one medical imaging device for acquiring the first and/or second image data or from a different medical imaging device. The medical imaging device for acquiring the initial image data can comprise a magnetic resonance imaging system (MRI) and/or a positron emission tomography system (PET) and/or an ultrasound system and/or a medical X-ray system and/or a computed tomography system (CT) and/or an optical imaging system, for example an endoscope and/or a laparoscope.

The registering of the first image data with the geometric and/or anatomical model and/or the initial image data can be based on the further features, in particular geometrical and/or anatomical features, of the first class of features of the examination region, which are mapped in the first image data and represented, in particular mapped or modelled, in the geometric and/or anatomical model and/or the initial image data at the first level of detail. Further, the registering of the first image data with the geometric and/or anatomical model and/or the initial image data can comprise determining a further transformation rule for rigidly and/or deformably transforming, in particular translating and/or rotating and/or deforming and/or scaling, the geometric and/or anatomical model and/or the initial image data and/or the first image data. Advantageously, a minimum level of accuracy of the registration of the first image data with the geometric and/or anatomical model and/or the initial image data, in particular a minimum level of accuracy of the further transformation rule, can be equivalent to the first level of detail. The registering of the first image data with the geometric and/or anatomical model and/or the initial image data can comprise minimizing a deviation, in particular a misalignment, between the further features. Hence, the registering of the first image data with the geometric and/or anatomical model and/or the initial image data can comprise an alignment of the further features at the first level of detail. Further, the registering of the first image data with the geometric and/or anatomical model and/or the initial image data can comprise applying the further transformation rule to the first image data. Advantageously, the model dataset can comprise the registered first image data and at least one of the geometric model, the anatomical model or the initial image data.

The preferred embodiment can advantageously employ the geometric and/or anatomical model, in particular the further features represented in the geometric and/or anatomical model, and/or the initial image data as a 2D or 3D structure for spatially arranging, in particular reconstructing, the model dataset, in particular the second features, based on the first image data.

In an especially preferred embodiment of the proposed method the second class of features is unique above the first level of detail. Further, the pre-alignment of the model dataset and the second image data can provide a pre-alignment of the second features of the second class of features at the first level of detail for registering the model dataset and the second image data at the second level of detail.

Advantageously, the second class of features can be unique, in particular unambiguous, above the first level of detail, in particular within a spatial extent and/or time span which corresponds to the spatial resolution and/or time resolution characterizing the first level of detail. Conversely, the second class of features can be ambiguous at the first level of detail. As a consequence, for unambiguously aligning the model dataset and the second image data at the second level of detail, the second features of the second class of features need to be pre-aligned at the first level of detail.

The pre-alignment of the model dataset and the second image data can be based on the first features of the first class of features which are mapped at the first level of detail in the model dataset and the second image data. As a consequence of this pre-alignment, the second features of the second class of features, which are mapped at the second level of detail in the model dataset and the second image data, can also be pre-aligned at the first level of detail.

Advantageously, the pre-alignment between the model dataset and the second image data at the first level of detail can facilitate an unambiguous identification of corresponding mappings of the second features at the second level of detail for the registering of the model dataset and the second image data at the second level of detail. Here, the second features can act as unambiguous fingerprints, in particular identifiers, between their respective mappings in the model dataset and the second image data at the second level of detail.

In an especially preferred embodiment of the proposed method the first image data can comprise several first mappings of the examination region, wherein each of the first mappings maps at least one of the first features. The generating of the model dataset can comprise reconstructing the model dataset from the first mappings.

Advantageously, the first mappings can map the examination region with at least partially, in particular completely, different acquisition geometries, for example different mapping directions and/or mapping positions, and/or at different first acquisition times. Moreover, the first mappings can map at least partially different or at least partially overlapping sections of the examination region.

Further, the generating of the model dataset can comprise a 2D or 3D reconstruction based on the first mappings of the examination region. In particular, the model dataset can be reconstructed from the first mappings by using features of the first and/or second class of features as scaffold which features are mapped in at least two of the first mappings, for example a vasculature. The reconstruction of the model dataset from the first mappings can be based on the acquisition geometries of the first mappings, in particular relative to each other and/or relative to the subject. Alternatively or in addition, the reconstruction of the model dataset from the first mappings can be based on common features of the examination region mapped in at least two of the first mappings. Thereby a better, in particular more precise and/or more comprehensive, mapping of the examination region can be achieved in the model dataset.

In an especially preferred embodiment of the proposed method the first image data maps several at least partially different sections of the examination region of the subject. Further, the registering of the model dataset and the second image data can comprise identifying at least one of the first mappings in the model dataset based on the pre-alignment of the model dataset and the second image data, which at least one first mapping corresponds with the mapping of the common part of the examination region in the second image data.

Advantageously, the first image data can map several at least partially, in particular completely, different sections, in particular spatial sections, of the examination region of the subject. Further, each of the at least partially different sections can comprise a 2D part, for example a slice, or a 3D part, for example a volume, of the examination region. Advantageously, the several at least partially different sections combined cover the examination region. The at least partially different sections can be of different or equal geometrical shape and/or size.

The pre-aligning of the model dataset and the second image data at the first level of detail can comprise determining a spatial and/or time correspondence between the mappings of the common part of the examination region in the model dataset and the second image data. The spatial or time correspondence between the mappings of the common part of the examination region in the model dataset and the second image data can comprise a spatial and/or time correspondence between image points of the model dataset and the second image dataset mapping the common part of the examination region.

Since the model dataset is generated, in particular reconstructed, based on the first image data, the at least one first mapping can be identified based on the pre-alignment of the model dataset and the second image data, in particular the spatial and/or time correspondence between the mappings of the common part of the examination region in the model dataset and the second image data. Advantageously, the mappings of the features of the second class of features in the first image data, which are non-unique, in particular ambiguous, below the first level of detail, can be narrowed to the mappings of the features of the second class of features within the identified at least one first mapping. Further, these mappings of the features of the second class of features within the identified at least one first mapping can comprise the second features which are used for registering the model dataset and the second image data. Thereby, a more robust and efficient registration between the model dataset and the second image data can be achieved.

In an especially preferred embodiment of the proposed method the first mappings can each map the common part of the examination region with at least partially different acquisition geometries in 2D. Further, the generating of the model dataset can comprise reconstructing the mapping of at least part of the first and/or second features in the model dataset from at least two of the first 2D mappings.

The first image data can comprise several first 2D mappings, in particular projection mappings and/or slice mappings, of the common part of the examination region. Further, the several first 2D mappings can feature at least partially, in particular completely, different acquisition geometries, for example different mapping directions, in particular angulations, and/or different mapping positions and/or different field-of-view dimensions and/or shapes. Advantageously, the first 2D mappings can map the common part of the examination region from at least partially different mapping directions and/or mapping positions. Further, the first 2D mappings can map at least partially, in particular completely, different projections and/or slices of the common part of the examination region.

Further, the mapping of the at least one of the first and/or second features, in particular of all first and/or second features, in the first image data can be reconstructed from at least two of the first 2D mappings. If the second image data maps the common part of the examination region in 3D, the reconstruction of the mapping of the at least one of the first and/or second features can comprise a 3D reconstruction based on the at least two of the first 2D mappings, in particular a back-projection of the at least two of the first 2D mappings. Alternatively, if the second image data can comprise at least one second 2D mapping, in particular several second 2D mappings, of the common part of the examination region, wherein the acquisition geometries of the first 2D mappings and the at least one second 2D mapping of the common part of the examination region are at least partially different. Here, the reconstruction can comprise a 3D reconstruction of a temporary dataset based on the at least two of the first 2D mappings, in particular a back-projection of the at least two of the first 2D mappings, and a subsequent 2D reconstruction, in particular a forward projection, based on the acquisition geometry of the second image data and the temporary dataset.

Thereby, a more robust registration between the model dataset and the second image data can be achieved.

In an especially preferred embodiment of the proposed method the second image data can comprise several second 2D mappings of the common part of the examination region with at least partially different acquisition geometries. Further, the mapping of at least part of the first and/or second features in the second image data is reconstructed from at least two of the second 2D mappings.

The second image data can comprise several second 2D mappings, in particular projection mappings and/or slice mappings, of the common part of the examination region. Further, the several second 2D mappings can feature at least partially, in particular completely, different acquisition geometries, for example different mapping directions, in particular angulations, and/or different mapping positions and/or different field-of-view dimensions and/or shapes. Advantageously, the second 2D mappings can map the common part of the examination region from at least partially different mapping directions and/or mapping positions. Further, the second 2D mappings can map at least partially, in particular completely, different projections and/or slices of the common part of the examination region.

Further, the mapping of the at least one of the first and/or second features, in particular of all first and/or second features, in the second image data can be reconstructed from at least two of the second 2D mappings. If the first image data maps the common part of the examination region in 3D, the reconstruction of the mapping of the at least one of the first and/or second features can comprise a 3D reconstruction based on the at least two of the second 2D mappings, in particular a back-projection of the at least two of the second 2D mappings. Alternatively, if the first image data comprises at least one first 2D mapping, in particular several first 2D mappings, of the common part of the examination region, wherein the acquisition geometries of the at least one first 2D mapping and the second 2D mappings of the common part of the examination region are at least partially different. Here, the reconstruction can comprise a 3D reconstruction of a further temporary dataset based on the at least two of the second 2D mappings, in particular a back-projection of the at least two of the second 2D mappings, and a subsequent 2D reconstruction, in particular a forward projection, based on the acquisition geometry of the first image data and the further temporary dataset.

Thereby, a more robust registration between the model dataset and the second image data can be achieved.

In an especially preferred embodiment of the proposed method the common part of the examination region can comprise a first part of an anatomical object. Moreover, the second image data can, in particular exclusively, map a second part of the anatomical object, which second part is not mapped in the model dataset. In addition, the registering of the model dataset and the second image data can comprise determining a first deformation rule for the mapping of the first part of the anatomical object in the second image data based on the second features. Further, the registering of the model dataset and the second image data can comprise determining a second deformation rule for the mapping of the second part of the anatomical object in the second image data by extrapolating the first deformation rule. In addition, the registering of the model dataset and the second image data can comprise applying the first and the second deformation rule to the second image data.

The anatomical object can comprise an organ, for example a liver and/or a kidney and/or a hollow organ, and/or a tissue, in particular a tumor. Advantageously, the first part of the anatomical object can be commonly mapped in the model dataset and the second image data. The first part can comprise a spatial section of the anatomical object. Further, the second part of the anatomical object can be mapped in the second image data but not in the model dataset. Likewise, the second part of the anatomical object can comprise a further spatial section of the anatomical object. Advantageously, the first and second part of the anatomical object combined can cover the anatomical object. Moreover, the first and the second part of the anatomical object can be spatially adjacent to each other.

The determining of the first deformation rule for the mapping of the first part of the anatomical object in the second image data can comprise aligning the second features mapped in the model dataset and the second image data at the second level of detail. Advantageously, at least one, in particular several or all, of the second features are geometrical and/or anatomical features of the first part of the anatomical object. The first deformation rule can comprise a rule, in particular instructions, for a rigid and/or deformable transformation, in particular a translation and/or rotation and/or deformation and/or scaling, of the mapping of the first part of the anatomical object in the model dataset and/or the second image data in order to align the second features of the first part of the anatomical object.

The determining of the second deformation rule for the mapping of the second part of the anatomical object in the second image data can comprise extrapolating the first deformation rule. This extrapolation can be based on a geometrical relation, in particular a position and/or orientation, and/or an anatomical relation, in particular a tissue and/or an organ parameter, for example an elasticity and/or a tissue composition and/or a vascularization, between the first and the second part of the anatomical object. Alternatively or in addition, the extrapolation of the first deformation rule can be based on a biomechanical model of the anatomical object, which can be inferred from the model dataset and/or the second image data. As a consequence, the rule, in particular the instructions, for the rigid and/or deformable transformation of the first and/or the second image data can be extrapolated to the mapping of the second part of the anatomical object in the second image data.

The advantageous embodiment of the proposed method can advantageously enable an extension of the registration between the mappings of the common part of the examination region, in particular the first part of the anatomical object, in the model dataset and the second image data to the second part of the anatomical object, which is exclusively mapped in the second image data.

In an especially preferred embodiment of the proposed method the providing of the result image data can comprise mixing and/or overlaying and/or superimposing the registered second image data with the model dataset. Alternatively, the providing of the result image data can comprise mixing and/or overlaying and/or superimposing the registered model dataset with the second image data.

The providing of the result image can comprise a, in particular weighted and/or regional, mixing, for example an adding and/or a multiplying, and/or an, in particular partially transparent, overlaying and/or superimposing of the registered second image data with the model dataset. Alternatively, the providing of the result image can comprise a, in particular weighted and/or regional and/or global and/or point-wise, mixing, for example an adding and/or a multiplying, and/or an, in particular partially transparent, overlaying and/or superimposing of the registered model dataset with the second image data.

Thereby, the result image can advantageously comprise aligned features of the model dataset and the second image data.

In a second aspect, the current invention concerns a provision unit which is configured to execute a proposed method for providing result image data according to the invention. The provision unit can comprise a calculation unit, a memory unit and/or an interface. Further the provision unit can be configured to execute an embodiment of the proposed method for providing result image data according to the invention, wherein the calculation unit, the memory unit and/or the interface are configured to execute the respective steps. In particular, the interface can be configured to receive the first and the second image data. Further, the interface can be configured to provide the result image data. Moreover, the calculation and/or the memory unit can be configured to generate the model dataset, to pre-align and to register the model dataset and the second image data.

All remarks and advantages laid out above regarding the method for providing result image data also apply to the provision unit according to the invention and vice versa. Additional features, advantages and/or alternative embodiments laid out above regarding the method for providing result image data may also be transferred to advantageous embodiments of the provision unit according to the invention and vice versa.

In a third aspect, the current invention concerns a system comprising a provision unit according to the invention, at least one medical imaging device and a display unit. The at least one medical imaging device is configured to acquire first image data of a subject including an examination region, wherein the first image data maps the examination region. In addition, the at least one medical imaging device is configured to acquire second image data of the subject, wherein the first and the second image data map at least a common part of the examination region at a second level of detail. The provision unit is configured to generate a model dataset based on the first image data. Moreover, the provision unit is configured to pre-align the model dataset and the second image data at a first level of detail below the second level of detail based on first features of a first class of features of the examination region which are mapped at the first level of detail in the model dataset and the second image data. Alternatively or in addition, the provision unit is configured to pre-align the model dataset and the second image data at the first level of detail based on an acquisition geometry of the second image data with respect to the subject, in particular the examination region. Further, the provision unit is configured to register the model dataset and the second image data at the second level of detail based on second features of a second class of features of the examination region which are mapped at the second level of detail in the model dataset and the second image data, wherein the second class of features is mappable at the second level of detail or above. In addition, the provision unit is configured to provide the registered second image data and/or the registered model dataset as result image data. Moreover, the display unit is configured to display a graphical representation of the result image data.

All remarks and advantages laid out above regarding the method for providing result image data also apply to the system according to the invention and vice versa. Additional features, advantages and/or alternative embodiments laid out above regarding the method for providing result image data may also be transferred to advantageous embodiments of the system according to the invention and vice versa.

The at least one medical imaging device can comprise a magnetic resonance imaging system (MRI) and/or a positron emission tomography system (PET) and/or an ultra-sound system and/or a medical X-ray system and/or a computed tomography system (CT) and/or an optical imaging system as an imaging modality.

The display unit can comprise a display and/or monitor and/or screen and/or a projector, which is configured to visually display the graphical representation of the result image data.

In an especially preferred embodiment of the proposed system the system can comprise a first and a second medical imaging device, wherein the first and the second medical imaging device are different imaging modalities. Further, the first medical imaging device can be configured to acquire the first image data. Moreover, the second medical imaging device can be configured to acquire the second image data.

Advantageously, the first and second image data can each be acquired by a dedicated medical imaging device, in particular the first and the second medical imaging device. As a consequence of the different imaging modalities, the first and/or the second features can be mapped differently in the first and second image data, in particular with different intensity and/or contrast characteristics. Advantageously, the provision unit can be configured to identify the first and/or second features based on geometric characteristics which are commonly mapped in the first and second image data, for example a shape and/or contour and/or a pattern.

In an especially preferred embodiment of the proposed system the first medical imaging device can be an extracorporeal imaging modality. Further, the second medical imaging device can be an endoluminal imaging modality.

The first medical imaging device can be configured to acquire the first image data from outside the subject, for example by detecting a transmitted and/or reflected portion of acoustic and/or electromagnetic waves after an interaction with the examination region. The second medical imaging device can be a diagnostic and/or surgical instrument, for example an endoscope and/or laparoscope and/or bronchoscope and/or catheter, which is configured to be at least partially inserted into the subject, in particular a cavity and/or hollow organ of the subject. Advantageously, the second medical imaging device can be configured to acquire the second image data from within the subject, in particular from within the examination region.

In a fourth aspect, the current invention concerns a computer program product. The computer program product can comprise a computer program. The computer program according to the invention may, for example, be directly loaded into a memory of a provision unit and comprises program means to perform the steps of a method for providing result image data according to the invention if the computer program is executed in the provision unit. The computer program may be stored on an electronically readably storage medium, which thus comprises electronically readable control information stored thereon. The control information comprises at least a computer program according to the invention and is configured such that the control information executes a method for providing result image data according to the invention when the storage medium is used in a provision unit. The electronically readably storage medium according to the invention may preferably be a non-transient medium, in particular a CD-ROM. The computer program product may comprise further elements, such as a documentation and/or additional components, in particular hardware dongles for using the software.

In addition, the current invention may also emanate from an electronically readable storage medium, which stores electronically readable control information such that the control information executes a method for providing result image data according to the invention when the storage medium is used in a provision unit.

A largely software-based implementation bears the advantage that previously used provision units can be easily upgraded via a software update in order to execute a method for providing result image data according to the present invention.

Further details and advantages of the current invention become apparent from the following detailed description of preferred embodiments taken in conjunction with the drawings, in which:
- Fig. 1 to 5: show schematic representations of different advantageous embodiments of a proposed method for providing result image data,
- Fig. 6: shows a schematic representation of an advantageous embodiment of a proposed provision unit,
- Fig. 7 to 8: show schematic representations of different advantageous embodiments of a proposed system.

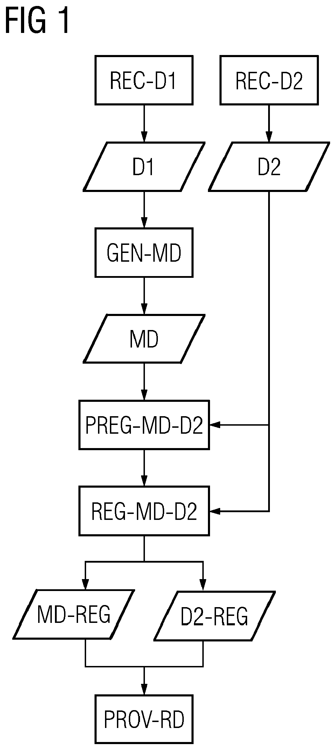

Fig. 1 shows a schematic representation of an advantageous embodiment of a proposed method for providing PROV-RD result image data. In a first step, pre-acquired first image data D1 of a subject including an examination region can be received REC-D1. Further, the first image data D1 can map the examination region. In a further step, a model dataset MD can be generated GEN-MD based on the first image data D1. In a further step, pre-acquired second image data D2 of the subject can be received REC-D2. Moreover, the model dataset MD and the second image data D2 can map at least a common part of the examination region at a second level of detail. In a further step, the model dataset MD and the second image data D2 can be pre-aligned PREG-MD-D2 at a first level of detail below the second level of detail based on first features of a first class of features of the examination region which are mapped at the first level of detail in the model dataset MD and the second image data D2. Alternatively or in addition, the model dataset MD and the second image data D2 can be pre-aligned PREG-MD-D2 at the first level of detail based on an acquisition geometry of the second image data D2 with respect to the subject, in particular the examination region. In a further step, the model dataset MD and the second image data D2 can be registered REG-MD-D2 at the second level of detail based on second features of a second class of features of the examination region which are mapped at the second level of detail in the model dataset MD and the second image data D2. Advantageously, the second class of features can be mappable at the second level of detail or above. In a further step, the registered second image data D2-REG and/or the registered model dataset MD-REG can be provided PROV-RD as the result image data.

Advantageously, the second class of features can be unique above the first level of detail. Further, the pre-alignment PREG-MD-D2 of the model dataset MD and the second image data D2 can provide a pre-alignment of the second features of the second class of features at the first level of detail for the registering REG-MD-D2 of the model dataset MD and the second image data D2 at the second level of detail. Here, the second features can act as unambiguous fingerprints, in particular identifiers, between their respective mappings in the model dataset MD and the second image data D2 at the second level of detail. A spatial circumference of the uniqueness of the second class of features can depend on a level of accuracy of the pre-alignment PREG-MD-D2 between the model dataset MD and the second image data D2, in particular the first level of detail. For example, if the pre-alignment PREG-MD-D2 is spatially accurate by 2 cm, the second class of features needs to be unique within a spatial circumference, in particular a search space, of 2 cm. Alternatively, multiple non-unique features of the second class of features may be combined based on combinatoric methods to achieve uniqueness within the spatial circumference. The spatial circumference of the uniqueness of the second class of features can be determined by matching each feature of the second class of features to all other features of the second class of features in the examination region and measuring a spatial distance between the matching features. Alternatively, the spatial circumference of the uniqueness of the second class of features can be determined by statistical analysis of its complexity. Furthermore, the spatial circumference of the uniqueness of the second class of features can become larger with a more complex geometry and/or pattern of the features of the second class of features.

Further, the providing PROV-RD of the result image data can comprise mixing and/or overlaying and/or superimposing the registered second image data D2-REG with the model dataset MD. Alternatively, the providing PROV-RD of the result image data can comprise mixing and/or overlaying and/or superimposing the registered model dataset MD-REG with the second image data D2.

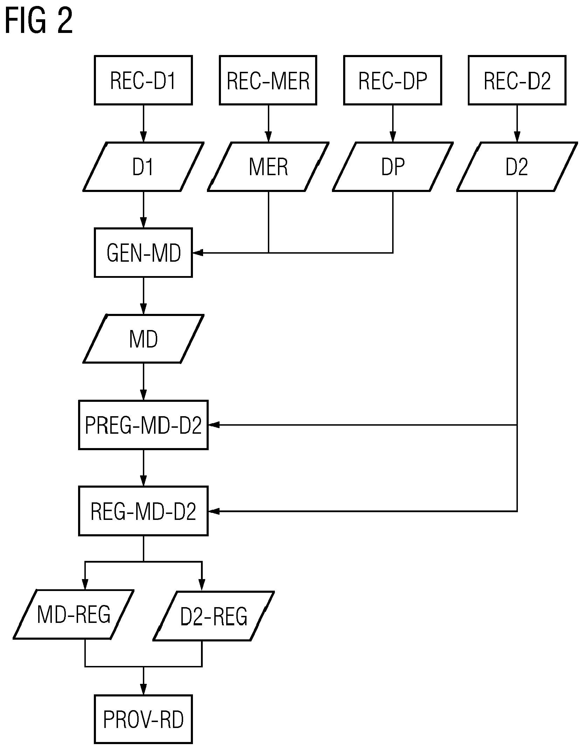

Fig. 2 shows a schematic representation of a further advantageous embodiment of a proposed method for providing PROV-RD result image data, wherein a geometric and/or anatomical model MER and/or initial image data DP of the examination region can be received REC-MER, REC-DP. Further, the generating GEN-MD of the model dataset MD can comprise registering the first image data D1 to the geometric and/or anatomical model MER and/or the initial image data DP based on further features of the first class of features which are mapped in the first image data D1 and represented in the geometric and/or anatomical model MER and/or the initial image data DP at the first level of detail.

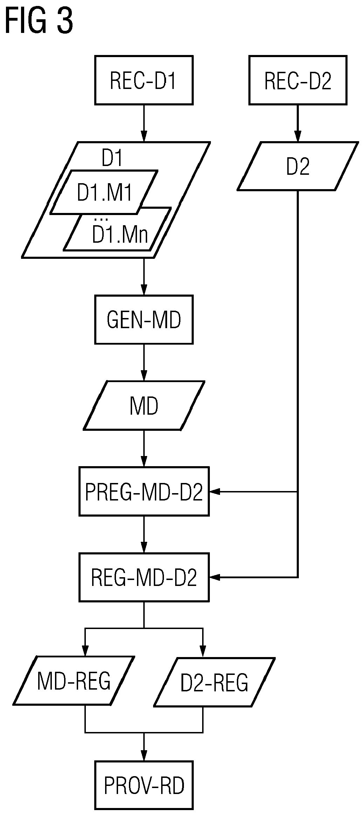

Fig. 3 shows a schematic representation of a further advantageous embodiment of a proposed method for providing PROV-RD result image data, wherein the first image data D1 can comprise several first mappings D1.M1 to Dl.Mn of the examination region. Further, the generating GEN-MD of the model dataset MD can comprise reconstructing the model dataset MD from the first mappings D1.M1 to Dl.Mn.

Advantageously, the first mappings D1.M1 to Dl.Mn can map several at least partially different sections of the examination region of the subject. Further, the registering REG-MD-D2 of the model dataset MD and the second image data D2 can comprise identifying at least one of the first mappings in the model dataset MD based on the pre-alignment PREG-MD-D2 of the model dataset MD and the second image data D2, which at least one first mapping corresponds with the mapping of the common part of the examination region in the second image data D2.

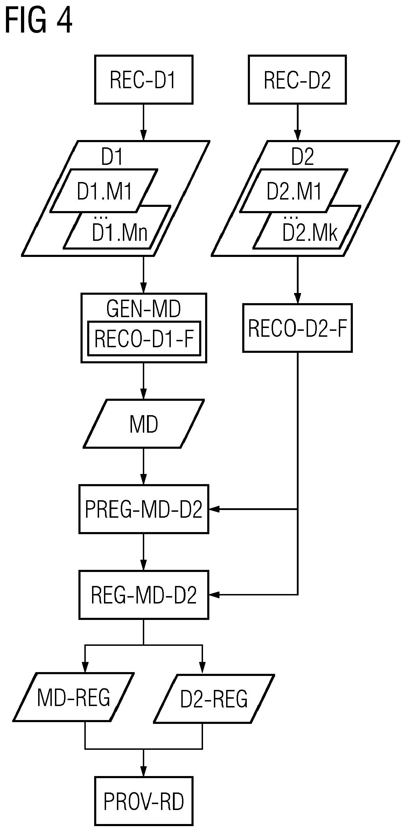

Fig. 4 shows a schematic representation of a further advantageous embodiment of a proposed method for providing PROV-RD result image data, wherein the first mappings D1.M1 to Dl.Mn each map the common part of the examination region with at least partially different acquisition geometries in 2D. In addition, the generating GEN-MD of the model dataset MD can comprise reconstructing RECO-D1-F the mapping of at least part of the first and/or second features in the model dataset MD from at least two of the first mappings D1.M1 to Dl.Mn.

In addition, the second image data D2 can comprise several second 2D mappings D2.M1 to D2.Mk of the common part of the examination region with at least partially different acquisition geometries. Further, the mapping of at least part of the first and/or second features in the second image data D2 can be reconstructed RECO-D2-F from at least two of the second 2D mappings D2.M1 to D2.Mk.

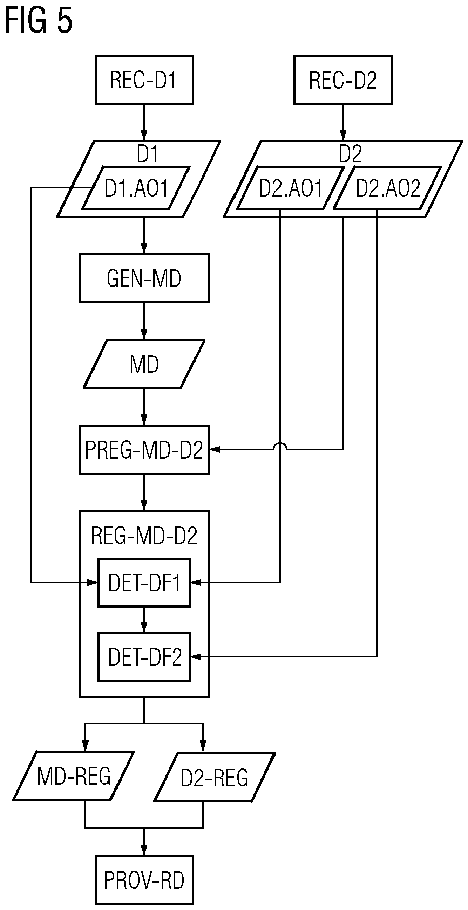

Fig. 5 shows a schematic representation of a further advantageous embodiment of a proposed method for providing PROV-RD result image data, wherein the examination region can comprise an anatomical object. Further, the common part of the examination region can comprise a first part of the anatomical object. Hence, the first D1 and the second image data D2 can each map the first part of the anatomical object D1.A01 and D2.A01. Moreover, the second image data D2 can map a second part of the anatomical object D2.AO2, which second part D2.AO2 is not mapped in the model dataset MD. In particular, the second part of the anatomical object D2.AO2 is not comprised by the common part of the examination region. Advantageously, the registering REG-MD-D2 of the model dataset MD and the second image data D2 can comprise determining DET-DF1 a first deformation rule for the mapping of the first part of the anatomical object in the second image data D2.A01 based on the second features. Further, the registering REG-MD-D2 of the model dataset and the second image data D2 can comprise determining DET-DF2 a second deformation rule for the mapping of the second part of the anatomical object in the second image data D2.AO2 by extrapolating the first deformation rule. Moreover, the registering REG-MD-D2 of the model dataset and the second image data D2 can comprise applying the first and the second deformation rule to the second image data D2.

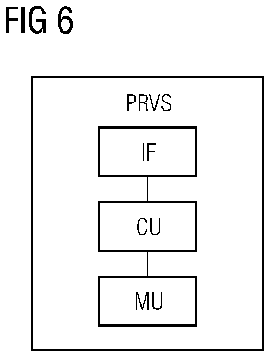

Fig. 6 shows a schematic representation of an advantageous embodiment of a proposed provision unit PRVS. The provision unit PRVS can comprise a calculation unit CU, a memory unit MU and/or an interface IF. Further the provision unit PRVS can be configured to execute an embodiment of the proposed method for providing PROV-RD result image data according to the invention, wherein the calculation unit CU, the memory unit MU and/or the interface IF are configured to execute the respective steps. In particular, the interface IF can be configured to receive the first and the second image data REC-D1 and REC-D2. Further, the interface IF can be configured to provide PROV-RD the result image data. Moreover, the calculation CU and/or the memory unit MU can be configured to generate GEN-MD the model dataset MD, to pre-align PREG-MD-D2 and to register REG-MD-D2 the model dataset MD and the second image data D2.

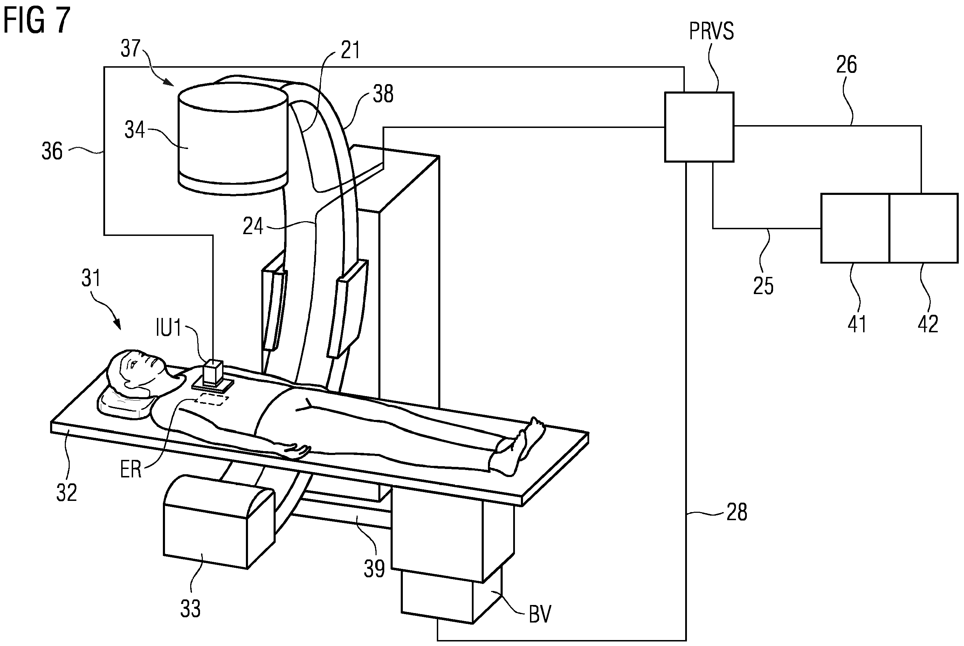

Fig. 7 shows a schematic representation of an advantageous embodiment of a proposed system, wherein the system advantageously comprises a provision unit PRVS according to the invention, a first medical imaging device, a second medical imaging device and a display unit 41. The first and the second medical imaging device can be different imaging modalities. In particular, the first medical imaging device can be embodied as a medical C-arm X-ray system 37, which can be configured to acquire the first image data D1 of the subject 31 including the examination region ER. Further, the second medical imaging device can be embodied as a medical ultrasound device IU1, which is configured to acquire the second image data D2 of the subject 31. The first D1 and the second image data D2 can advantageously map at least the common part of the examination region ER at the second level of detail.

The medical C-arm X-ray system 37 can comprise an X-ray detector 34 and an X-ray source 33, which can be mounted to a C-arm 38 of the C-arm X-ray system 37 such that they are movable, in particular rotatable, around at least one axis. In addition, the medical C-arm X-ray system 37 can comprise a motion unit 39, in particular comprising at least a wheel and/or rail and/or robotic system, which permits a spatial motion of the medical C-arm X-ray system 37. For the acquisition of the first image data D1 of the subject 31, in particular comprising at least one projection image of the of the subject 31, the provision unit PRVS can send a signal 24 to the X-ray source 33. Consequently, the X-ray source 33 can emit an X-ray bundle, in particular a cone-beam and/or a fan-beam and/or a parallel-beam. When the X-ray bundle impinges on a surface of the X-ray detector 34 after an interaction between the X-ray bundle and the region under examination RE of the subject 31, the X-ray detector 34 can send a signal 21 to the provision unit PRVS which is dependent on the detected X-rays. Based on the signal 21 the provision unit PRVS can be configured to receive first image data D1.

The medical ultrasound device UI1 can comprise at least one ultrasound transducer. In particular, the medical ultrasound device UI1 can comprise multiple ultrasound transducers which can be spatially arranged in a loop, in particular an ellipse or circle, a row, an array and/or a matrix. The at least one ultrasound transducer can be configured to emit a field of ultrasound into the subject 31, in particular the examination region ER, by means of a coupling medium, for example a gel. Further, the at least one ultrasound transducer can be configured to detect a reflected and/or transmitted portion of the ultrasound field after an interaction between the ultra-sound field and the subject 31, in particular the examination region ER. Advantageously, the medical ultrasound device UI1 can be configured to provide a signal 36 depending on the received portion of the ultrasound field. Based on the signal 36 the provision unit PRVS can be configured to receive second image data D2.

The provision unit PRVS can be configured to generate the model dataset MD based on the first image data D1. Moreover, the provision unit PRVS can be configured to pre-align PREG-MD-D2 the model dataset MD and the second image data D2 at a first level of detail below the second level of detail based on first features of the first class of features of the examination region ER which are mapped at the first level of detail in the model dataset MD and the second image data D2. Alternatively or in addition, the provision unit PRVS can be configured to pre-align PREG-MD-D2 the model dataset MD and the second image data D2 at the first level of detail based on an acquisition geometry of the second image data D2 with respect to the subject 31, in particular the examination region ER. In addition, the provision unit PRVS can be configured to register REG-MD-D2 the model dataset MD and the second image data D2 at the second level of detail based on second features of a second class of features of the examination region ER which are mapped at the second level of detail in the model dataset MD and the second image data D2. Advantageously, the second class of features is mappable at the second level of detail or above. Further, the provision unit PRVS can be configured to provide PROV-RD the registered second image data D2-REG and/or the registered model dataset MD-REG as result image data. In particular, the provision unit PRVS can be configured to provide PROV-RD the registered second image data D2-REG and/or the registered model dataset MD-REG as result image data to the display unit 41 via a signal 25.

The display unit 41 can comprise a display and/or monitor, which is configured to display the graphical representation of the result image data. The system can further comprise an input unit 42, in particular a keyboard. The input unit 42 can advantageously be integrated into the display unit 41, for example as a capacitive and/or resistive touch display. The input unit 42 can be configured to capture a user input, for example from a medical staff. Further, the provision unit PRVS can be configured to receive the user input from the input unit 42 via a signal 26. The provision unit PRVS can be configured to control the acquisition of the first D1 and the further image data D2 by means of the medical C-arm X-ray system 37 based on the user input, in particular based on the signal 26.

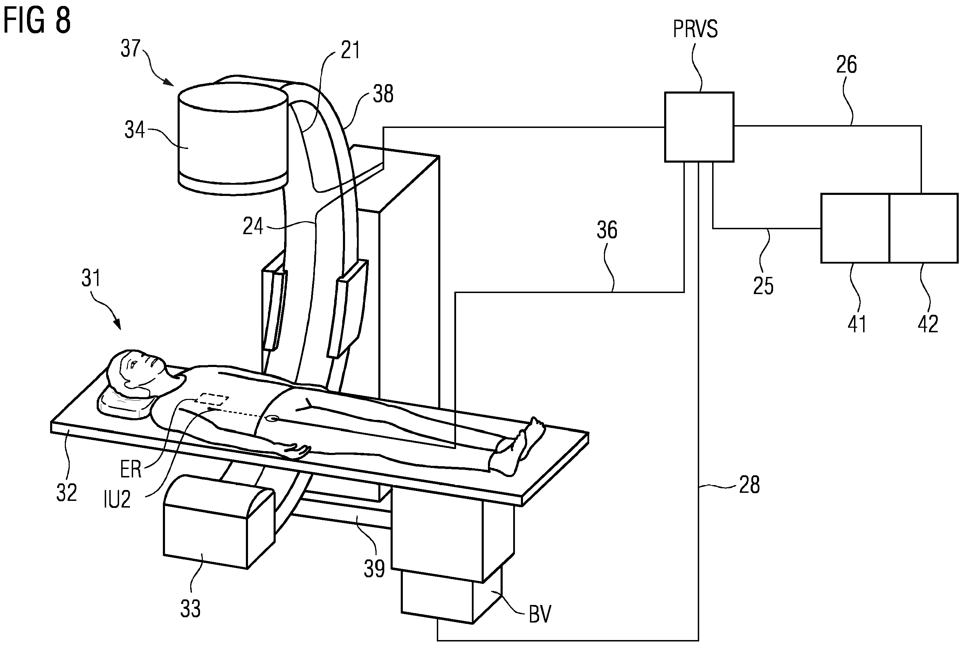

Fig. 8 shows a schematic representation of a further advantageous embodiment of a proposed system, wherein the first medical imaging device can be an extracorporeal imaging modality. Like illustrated in Fig. 7, the first medical imaging device can be embodied as the medical C-arm X-ray system 37, which can be configured to acquire the first image data D1 from outside the subject. Further, the second medical imaging device IU2 can be embodied as an endoluminal imaging modality, in particular a diagnostic and/or surgical instrument, for example an endoscope and/or laparoscope and/or bronchoscope and/or catheter, which is configured to be at least partially inserted into the subject 31, in particular a cavity and/or hollow organ of the subject 31. The second medical imaging device IU2 can be configured to acquire the second image data D2 from within the subject 31, in particular from within the examination region ER and/or adjacent to the examination region ER. The second imaging device IU2 can be configured to provide the second image data D2 to the provision unit PRVS via the signal 36.

Although the present invention has been described in detail with reference to preferred embodiments, the present invention is not limited by the disclosed examples from which the skilled person is able to derive other variations without departing from the scope of the invention. In addition, the utilization of indefinite articles such as "a" and/or "an" does not exclude multiples of the respective features. Moreover, terms such as "unit" and "element" do not exclude that the respective components may comprise multiple interacting sub-components, wherein the sub-components may further be spatially distributed.

## Claims

1. Method for providing result image data (PROV-RD), comprising:
- receiving (REC-D2) pre-acquired first image data (D1) of a subject (31) including an examination region (ER),
wherein the first image data (D1) maps the examination region (ER),
- generating a model dataset (MD) based on the first image data (D1),
- receiving (REC-D2) pre-acquired second image data (D2) of the subject (31),
wherein the model dataset (MD) and the second image data (D2) map at least a common part of the examination region (ER) at a second level of detail,
- pre-aligning (PREG-MD-D2) the model dataset (MD) and the second image data (D2) at a first level of detail below the second level of detail based on:
- first features of a first class of features of the examination region (ER) which are mapped at the first level of detail in the model dataset (MD) and the second image data (D2) and/or
- an acquisition geometry of the second image data (D2) with respect to the subject, in particular the examination region (ER),
- registering (REG-MD-D2) the model dataset (MD) and the second image data (D2) at the second level of detail based on second features of a second class of features of the examination region (ER) which are mapped at the second level of detail in the model dataset (MD) and the second image data (D2),
wherein the second class of features is mappable at the second level of detail or above,
- providing (PROV-RD) the registered second image data (D2-REG) and/or the registered model dataset (MD-REG) as the result image data.

2. Method according to claim 1,
wherein a geometric and/or an anatomical model (MER) and/or initial image data (DP) of the examination region (ER) is received (REC-MER, REC-DP),
wherein the generating (GEN-MD) of the model dataset (MD) comprises registering the first image data (D1) to the geometric and/or anatomical model (MER) and/or the initial image data (DP) based on further features of the first class of features which are mapped in the first image data (D1) and represented in the geometric and/or anatomical model (MER) and/or the initial image data (DP) at the first level of detail.

3. Method according claim 1 or 2,
wherein the second class of features is unique above the first level of detail,
wherein the pre-alignment (PREG-MD-D2) of the model dataset (MD) and the second image data (D2) provides a pre-alignment of the second features of the second class of features at the first level of detail for registering (REG-MD-D2) the model dataset (MD) and the second image data (D2) at the second level of detail.

4. Method according to any of the preceding claims,
wherein the first image data (D1) comprises several first mappings (D1.M1, Dl.Mn) of the examination region (ER), wherein the generating (GEN-MD) of the model dataset (MD) comprises reconstructing the model dataset (MD) from the first mappings (D1.M1, Dl.Mn).

5. Method according to claim 4,
wherein the first mappings (D1.M1, Dl.Mn) map several at least partially different sections of the examination region (ER) of the subject (31),
wherein the registering (REG-MD-D2) of the model dataset (MD) and the second image data (D2) comprises identifying at least one of the first mappings in the model dataset (MD) based on the pre-alignment (PREG-MD-D2) of the model dataset (MD) and the second image data (D2), which at least one first mapping corresponds with the mapping of the common part of the examination region (ER) in the second image data (D2).

6. Method according to claim 4 or 5,
wherein the first mappings (D1.M1, Dl.Mn) each map the common part of the examination region (ER) with at least partially different acquisition geometries in 2D,
wherein the generating (GEN-MD) of the model dataset (MD) comprises reconstructing (RECO-D1-F) the mapping of at least part of the first and/or second features in the model dataset (MD) from at least two of the first mappings (D1.M1, Dl.Mn).

7. Method according to any of the preceding claims,
wherein the second image data (D2) comprises several second 2D mappings (D2.M1, D2.Mk) of the common part of the examination region (ER) with at least partially different acquisition geometries,
wherein the mapping of at least part of the first and/or second features in the second image data (D2) is reconstructed (RECO-D2-F) from at least two of the second 2D mappings (D2.M1, D2.Mk).

8. Method according to any of the preceding claims,
wherein the common part of the examination region (ER) comprises a first part of an anatomical object,
wherein the second image data (D2) maps a second part of the anatomical object, which second part is not mapped in the model dataset (MD),
wherein the registering (REG-MD-D2) of the model dataset (MD) and the second image data (D2) comprises:
- determining (DET-DF1) a first deformation rule for the mapping of the first part of the anatomical object in the second image data (D2.A01) based on the second features,
- determining (DET-DF2) a second deformation rule for the mapping of the second part of the anatomical object in the second image data (D2.AO2) by extrapolating the first deformation rule,
- applying the first and the second deformation rule to the second image data (D2).

9. Method according to any of the preceding claims,
wherein the providing of the result image data (PROV-RD) comprises mixing and/or overlaying and/or superimposing:
- the registered second image data (D2-REG) with the model dataset (MD) or
- the registered model dataset (MD-REG) with the second image data (D2).

10. Provision unit (PRVS), which is configured to execute a method according to any of claims 1 to 9.

11. System comprising a provision unit (PRVS) according to claim 10, at least one medical imaging device and a display unit (41),
wherein the at least one medical imaging device is configured to:
- acquire first image data (D1) of a subject (31) including an examination region (ER),
wherein the first image data (D1) maps the examination region (ER),
- acquire second image data (D2) of the subject (31),
wherein the first (D1) and the second image data (D2) map at least a common part of the examination region (ER) at a second level of detail,
wherein the provision unit (PRVS) is configured to:
- generate a model dataset (MD) based on the first image data (D1),
- pre-align (PREG-MD-D2) the model dataset (MD) and the second image data (D2) at a first level of detail below the second level of detail based on:
- first features of a first class of features of the examination region (ER) which are mapped at the first level of detail in the model dataset (MD) and the second image data (D2) and/or
- an acquisition geometry of the second image data (D2) with respect to the subject,
- register (REG-MD-D2) the model dataset (MD) and the second image data (D2) at the second level of detail based on second features of a second class of features of the examination region (ER) which are mapped at the second level of detail in the model dataset (MD) and the second image data (D2),
wherein the second class of features is mappable at the second level of detail or above,
- provide (PROV-RD) the registered second image data (D2-REG) and/or the registered model dataset (MD-REG) as result image data,
wherein the display unit (41) is configured to display a graphical representation of the result image data.

12. System according to claim 11,
wherein the system comprises a first and a second medical imaging device,
wherein the first and the second medical imaging device are different imaging modalities,
wherein the first medical imaging device is configured to acquire the first image data (D1),
wherein the second medical imaging device is configured to acquire the second image data (D2).

13. System according to claim 12,
wherein the first medical imaging device is an extracorporeal imaging modality,
wherein the second medical imaging device is an endoluminal imaging modality.

14. Computer program product, which comprises a program and is directly loadable into a memory of a programmable controller of a provision unit (PRVS), with program code sections, to execute all steps of a method according to one of the claims 1 to 9 when the program is executed in the programmable controller of the provision unit (PRVS).
